# EUROPEAN PATENT SPECIFICATION

(11) **EP 2 459 889 B1**
(45) Date of publication and mention of the grant of the patent: **25.10.2017**
(21) Application number: 10801434.1
(22) Date of filing: 02.08.2010
(51) Int. Cl.: F16B 7/18, F16B 2/06, F16B 37/04

(54) **CLAMP DEVICE AND FRAME SYSTEM**
KLEMMVORRICHTUNG UND RAHMENSYSTEM
DISPOSITIF DE SERRAGE ET SYSTÈME DE CHÂSSIS

(30) Priority: 31.07.2009 GB 0913411
(43) Date of publication of application: 06.06.2012
(73) Proprietor: Latchways PLC, Devizes Wiltshire SN10 2JP (GB)
(72) Inventor: HAMANN, Christian, Wiltshire SN10 2JP (GB)
(74) Representative: Davies, Gregory Mark
(86) International application number: PCT/GB2010/001461
(87) International publication number: WO 2011/012870

(56) References cited:
- EP-A2- 1 653 090
- DE-U1-202004 015 211
- GB-A- 2 410 288

## Description

The present invention relates to a clamp and frame system and particularly to such a system in which one or more elongate cross members such as bars, tubes or rails are secured to structures such as a support posts. In particular, the present invention relates to a clamp device according to the preamble of claim 1 (EP1653090A2). Guard rail systems or safety rail systems are known in which support posts are secured to the ground or another structure such as an overhead walkway or roof structure. Such systems generally utilise cross members secured between support posts. The number of, and spacing of, cross members and support posts will depend upon different considerations for different applications.

EP1653090A2 discloses a device for coupling a clamp base or body to a generally u-shaped guide rail. The body is biased toward the coupled position by a spring. The device can be repositioned along the length of the guide rail by compressing the spring. However, the problem of how to attach a cross member to the device is not addressed by EP1653090A2.

The present invention is particularly suited when applied to guard rail or safety rail systems in which cross members are secured between support posts. The invention provides a versatile and efficiently constructed system.

According to a first aspect, the present invention provides a clamp device for a frame system including a member to be secured to a support, the clamp device comprising:
an anchor element to be held captive by the support;
displacement means permitting a clamping portion of the device to move with respect to the support post between a first position for clamping the member and a second position for permitting the member to be docked or un-docked with the clamp device;
resilient biasing means arranged to bias the clamp toward the first position.

The displacement means in one embodiment preferably comprises a pivot or rocker formation (preferably carried by the clamp device and arranged to bear against the support post) enabling the clamping portion of the device to pivot or rock between the first and second positions.

The resilient biasing means may comprise a spring.

In one embodiment, it is preferred that a tightening actuator arrangement is provided enabling selective tightening of the clamping force applied by the clamping device. The tightening actuator arrangement may comprise a shaft having a thread cooperating with the anchor element.

In certain embodiments it may be preferred that the actuator arrangement includes an actuator that is:
concealed or positioned in the interior of a clamp body comprising the clamp device; and/or
actuatable from externally of the clamp device by a mechanical tool.

In one embodiment, the resilient biasing means may comprise a spring provided about a shaft and the shaft threadably engages with the anchor element. Beneficially, in certain embodiments the anchor element comprises a threaded nut or fastener. The anchor element is preferably constrained by the support post so as not to be able to rotate in unison with the shaft upon which it is mounted.

According to a second aspect, the invention comprises a frame system comprising a clamp device according to the first aspect of the invention and a support post to which the clamp device is to be mounted; the anchor element being held captive in an interior portion of the support post but able, in assembly, to move in the longitudinal direction of the post.

Beneficially, the anchor element can be secured to the support post in a plurality of different positions along the length of the post.

In a preferred realisation, the support post has an elongate slot extending in the longitudinal direction of the support post, the anchor element being dimensioned and/or constrained not to pass through the slot and the clamping portion of the device being positioned externally of the support post and connected to the anchor element by a connecting element extending through the slot.

Beneficially, the member to be clamped comprises an elongate cross member, such as for example a guard rail or safety rail system comprising a plurality of spaced support posts and a plurality of connecting cross members to be secured to the support posts. Further, the invention provides a frame system wherein the anchor element is held captive internally of the support, but capable of moving in the longitudinal direction of the support, internally of the support; in order to enable the clamp device to be secured to the support at different positions. The invention will now be described in specific embodiments, by way of example only and with reference to the accompanying drawings, in which:
Figure 1 is a schematic perspective view of a frame system in accordance with the invention utilising a clamp device in accordance with the invention.
Figure 1A is a sectional view of the support post of an exemplary system.
Figures 2 and 3 are perspective views of a clamp device according to the invention;
Figure 4 is a perspective view of the rear of the clamping device of figures 2 and 3;
Figure 5 is a plan view of a detail of the clamp device;
Figure 6 is a side view of the clamping devoice of the preceding figures;
Figures 7 to 9 are schematic views of a system according to the present invention with the clam device in differing orientations;
Figures 10 to 12 are schematic views of a system according to the present invention with the clam device in differing orientations, in accordance with an alternative realisation.

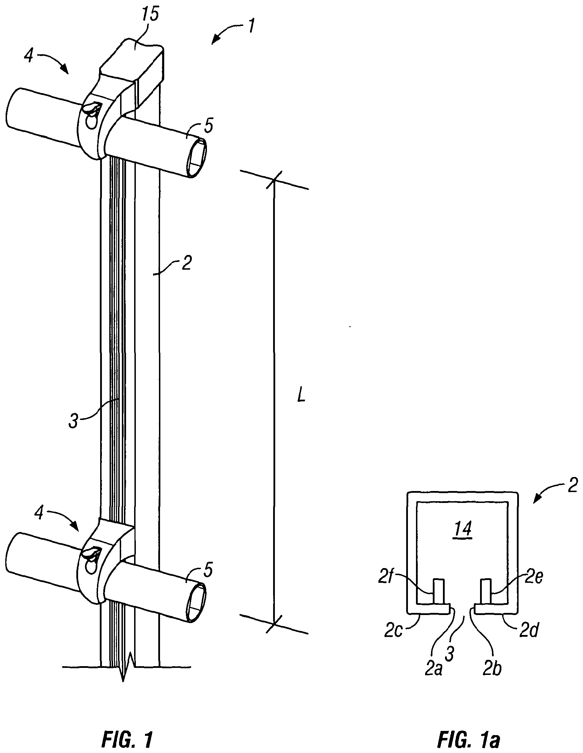

Referring to the drawings, Figure 1 shows a frame system in accordance with the present invention used as a guard rail or safety rail system. The frame system 1 comprises a support post 2 in the form of an elongate rectangular channel section aluminium extrusion. In one embodiment the extrusion section may be such as that shown in figure 1A. The support post is provided with a slot 3 running from top to bottom of the post, the slot 3 being defined between spaced longitudinally running edges 2a 2b of the post 2. Typically the support post 2 is anchored, for example by means of a footing or base plate and mechanical fixings or otherwise.

One or more clamp devices 4 are provided on the support post 2, the purpose of which is to clamp a respective cross member 5 to the post 2. Typically the frame system will comprise a number of support posts 2 and a respective cross-member 5 will be clamped at spaced support posts such that a respective cross-member 5will span across two or more support posts 2.

In certain embodiments the orientation of one or more of the clamp devices 4 with respect to the support post 2 will be adjustable. This is beneficially realised by the clamp device 4 being movable in the longitudinal direction of the support post to adjust the positional orientation of the clamp device 4 with respect to the support post. Additionally or alternatively and as will be described in detail hereinafter, the clamp devices may also be mounted with respect to the support post in alternative orientations. This may be achieved by means of the clamp device being re-orientatable about an axis, preferably when already mounted to the support post.

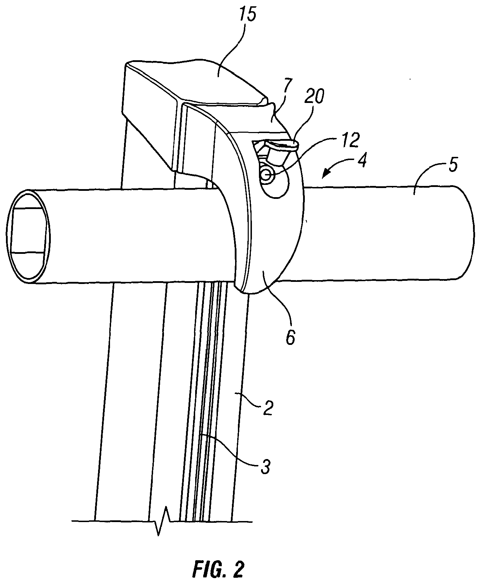

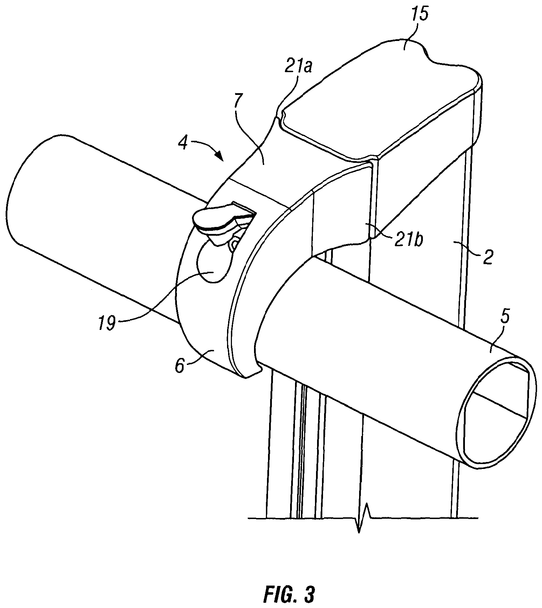

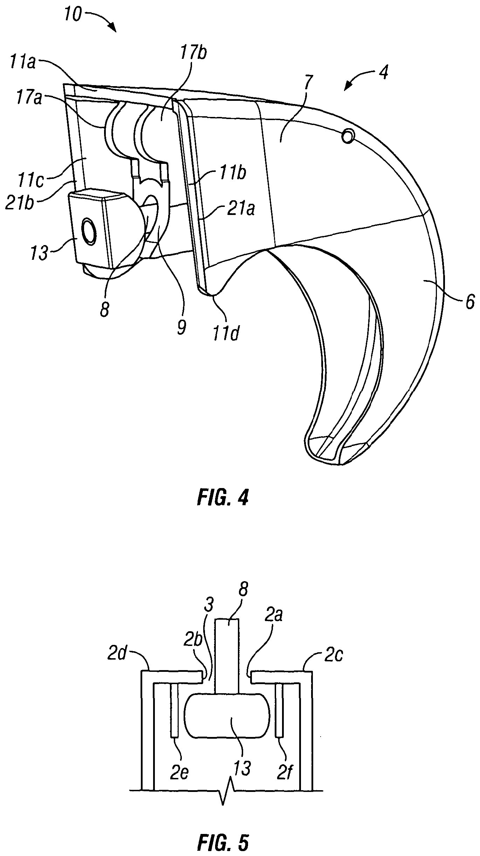

The clamp device 4 has a clamp element in the form of a pincer 6 which in one form has an arcuate capture zone and in use forms a securing element that clamps the cross-member 5 against the support post 2. As mounted to the post in the arrangements of figures 1 to 9, the clamp device presents an upwardly facing access opening into the capture zone of the clamp device 4.

The clamp device has a clamp body 7 from which the clamp pincer 6 projects. The clamp body has a contact end 10 which has peripheral contact edges 11, 11b, 11c which are secured to be held contacting against the front surface margins 2c 2d of the support post 2 adjacent the longitudinal slot 3. The clamp body receives and retains a shaft 8 provided in a bore 9 in the clamp body 7. The shaft 8 has a head 12 at a distal end and at a proximal threaded end an anchor nut 13 threadably fitted. The anchor nut 13 is received in the interior cavity 14 of the support post 2 and is so shaped and dimensioned that it can be prevented from being removed from the interior cavity 14 by passing through the slot 3 in the post 2. The anchor nut 13 is inserted into the interior of the cavity 14 by the open end of the post 2 which may then be closed by a cap 15. The interior section of the cavity is provided with spaced flanges 2e, 2f which prevent rotation of the anchor nut 13 on the axis of the threaded ended shaft 8. As the threaded shaft 8 rotates, the nut 13 is caused to move along the threaded shaft, in either one longitudinal direction or the other, dependant upon the sense of rotation of the shaft 8.

The nut 13 is thus retained (held captive) in the interior cavity 14 of the support post 2 as described and acts to anchor the clamp device 4 to the support post, such that the shaft 8 extends through the longitudinal slot 3 to the exterior of the support post 2. A helical spring 16 is positioned on the shaft 8 compressed between the shaft head 12 and a shoulder formed at the end of the bore 9 in the clamp body 7.

In addition to the peripheral contact edge 11, the contact end of the clamp body 7 also includes rocker/pivot formations 17a, 17b which each contact a respective one of the front surface margins 2c 2d of the support post 2 adjacent the longitudinal slot 3. The rocker/pivot formations 17 are positioned spaced from the position of the axis of the shaft 8 and spring 16.

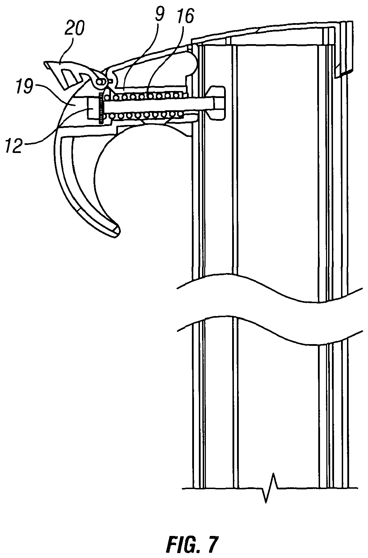

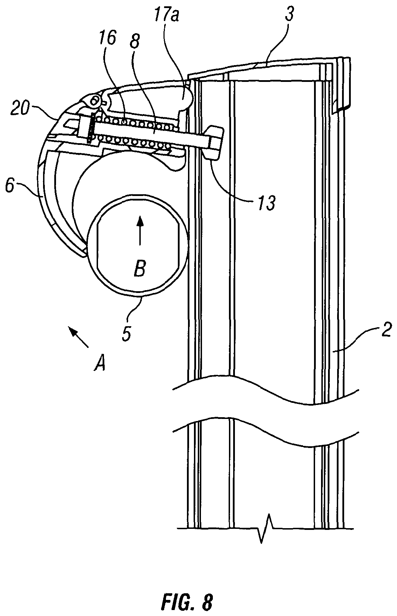

The spring 16 is loaded when in the position shown in figure 7, being in compression so as to tend to pull the clamp device 4 into contact with the support post 2 such that the peripheral contact edges 11, 11b, 11c and the rocker/pivot formations 17a, 17b are held contacting against the front surface margins 2c 2d of the support post 2 adjacent the longitudinal slot 3. This ensures that the clamp device 4 is held in position on the support post 2. The connection is however weak being limited by the compression of the spring. Furthermore the tip 6a of clamping pincer 6 can be pivoted away from the support post by applying a force in the direction of arrow A in figure 8 which causes the clamp device 4 to rock or pivot back on the rocker/pivot formations 17 causing the tips 11d of contact edges 11b 11c to lift out of contact with the front surface margins 2c 2d of the support post 2 adjacent the longitudinal slot 3. In so doing the spring 16 becomes further compressed between the shaft head 12 and a shoulder formed at the end of the bore 9 in the clamp body 7. As shown in figure 8, the force to deflect the pincer 6 may be provided by passing an appropriately dimensioned circular sectioned cross-member in the axial direction of the support post 2 (arrow B in figure 8) past the tip 6a of the pincer 6 in order to dock the cross-member in the clamping position.

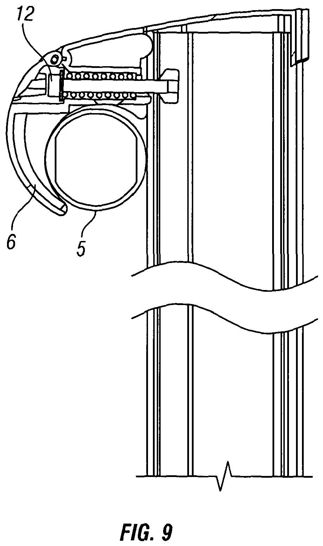

Once fully docked into the capture zone of the pincer 6 of the clamp device 4, the force of the spring 16 restores the pincer to its normal position as shown in figure 9. The spring force is sufficient to hold the clamp device 4 in position on the support post 2 and also to prevent the cross member 5 from falling out of the grasp of pincer 6. In order to more securely secure the grasp of the pincer 6 on the cross-member 5, the drive head 12 of the shaft is accessed and driven by a suitable tool in order to rotate the shaft in the correct rotational sense, such that the securing not moves relative to the nut in the direction of the drive head 12, in so doing tightening the pincer 6 onto the cross member 5. In order to achieve this, the drive head 12 is positioned to be accessible in a larger bore 19 which communicates with the bore 9 in the clamp device body 7, and also with the exterior surface of the clamp device facing away from the support post 2. The opening formed by the bore 19 may be plugged or covered by a flap, plug or cap such as hinged flap 20.

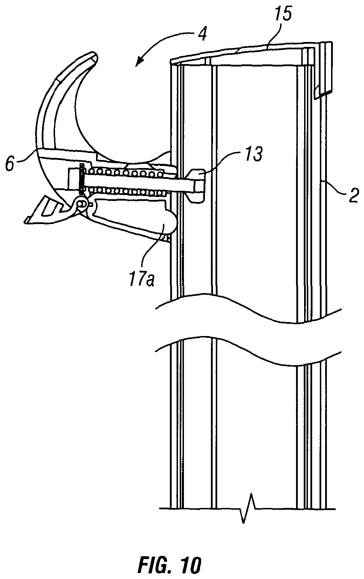

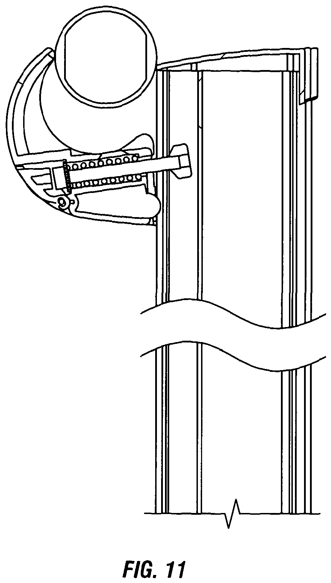

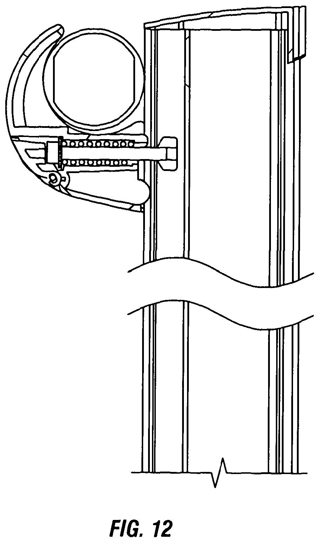

In the embodiment of figures 10 to 12 the clamp device 4 is identical in construction and general means of operation to that described in the earlier embodiments. However, in this embodiment the clamp device is mounted to the support post inverted (turned 180 degrees) such that the device presents an upwardly facing access opening into the capture zone of the clamp device 4. There are situations in which such an orientation may be preferred.

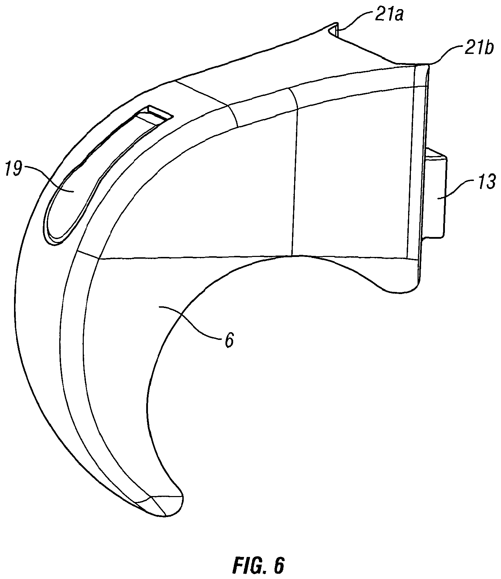

In certain embodiments it is possible to re-orientate the clamp body 7 through 180 degrees (between the configurations of figures 7 and 10) whilst the assembly remains secured to the support post 2. This is achieved by pulling the clamp body 7 outwardly away from the post 2 whilst the assembly remains secured to the support post 2 and then twisting the clamp body 7 through 180 degrees rotating about the axis of the connecting shaft 8. When the clamp body 7 is pulled outwardly from the post 2, the overlap edges 21a21b of the clamp body 7 (shown most clearly in figure 6) are disengaged from engagement with the support post 2 thereby permitting the clamp body to be rotated about the axis of shaft 8.

The arrangement of the invention provides that the clamps may be positioned easily and conveniently at different positions on a support post depending upon technical or commercial requirements. The same components can be used to achieve different frame system configurations. The clamp may be easily initially positioned and hold the cross-member without the need for any adjustment tooling to be used. Final securing may be achieved without the need to use any additional fixings not already on-board the clamp device.

## Claims

1. A clamp device (4) for a frame system (1) including a member (5) to be secured to a support (2), the clamp device (4) comprising:
an anchor element to be held captive by the support (2);
displacement means (17a, 17b);
resilient biasing means (16);
**characterised in that**
the displacement means (17a, 17b) permit a clamping portion (6) of the device to move with respect to the support between a first position for clamping the member (5) and a second position for permitting the member (5) to be docked or un-docked with the clamp device (4);
and the resilient biasing means (16) are arranged to bias the clamp (4) toward the first position.

2. A clamp device according to claim 1, wherein the displacement means comprises a pivot or rocker formation enabling the clamping portion of the device to pivot or rock between the first and second positions.

3. A clamp device according to claim 1 or claim 2, wherein the resilient biasing means comprises a spring.

4. A clamp device according to claim 1 or claim 2, comprising a tightening actuator arrangement enables selective tightening of the clamping force applied by the clamping device.

5. A clamp device according to claim 4, wherein the tightening actuator arrangement comprises a shaft having a thread cooperating with the anchor element.

6. A clamp device according to claim 4 or claim 5, wherein the actuator arrangement includes an actuator that is:
concealed or positioned in the interior of a clamp body comprising the clamp device; and/or
actuatable from externally of the clamp device by a mechanical tool.

7. A clamp device according to any preceding claim, wherein i) the resilient biasing means comprises a spring provided about a shaft and the shaft threadably engages with the anchor element; and/or
ii) the anchor element comprises a threaded nut or fastener.

8. A clamp device according to any preceding claim, and further comprising:
relatively weak force means acting via the anchor element to secure the clamp element; and
relatively higher force means acting via the anchor element to tighten the securing of the clamp element.

9. A clamp device according to any preceding claim, wherein the clamping portion is re-orientatable axially about an axis passing through the anchor element.

10. A frame system comprising a clamp device according to any preceding claim, wherein the system further includes a support post to which the clamp device is to be mounted; the anchor element being held captive in an interior portion of the support post but able, in assembly, to move in the longitudinal direction of the post.

11. A frame system of claim 10, wherein the anchor element can be secured to the support post in a plurality of different positions along the length of the post.

12. A frame system of claim 10 or claim 11, wherein the support post has an elongate slot extending in the longitudinal direction of the support post, the anchor element being dimensioned and/or constrained not to pass through the slot and the clamping portion of the device being positioned externally of the support post and connected to the anchor element by a connecting element extending through the slot.

13. A frame system of any of claims 10 to 12, wherein the member to be clamped comprises an elongate cross member.

14. A frame system of any of claims 10 to 13 comprising a guard rail or safety rail system comprising a plurality of spaced support posts and a plurality of connecting cross members to be secured to the support posts.

15. A frame system of any of claims 10 to 14, wherein the anchor element is held captive internally of the support, but capable of moving in the longitudinal direction of the support, internally of the support, in order to enable the clamp device to be secured to the support at different positions.

## Patentansprüche

1. Klemmvorrichtung (4) für ein Rahmensystem (1), die ein an einer Stütze (2) zu befestigendes Element (5) umfasst, wobei die Klemmvorrichtung (4) Folgendes umfasst:
ein Ankerelement, das unverlierbar von der Stütze (2) zu halten ist,
Verlagerungsmittel (17a, 17b),
federnde Vorspannmittel (16),
**dadurch gekennzeichnet, dass**
es die Verlagerungsmittel (17a, 17b) ermöglichen, dass sich ein Klemmabschnitt (6) der Vorrichtung in Bezug auf die Stütze zwischen einer ersten Position zum Klemmen des Elements (5) und einer zweiten Position bewegt, in der es ermöglicht wird, dass das Element (5) an die Klemmvorrichtung (4) angekoppelt oder von dieser abgekoppelt wird,
und die federnden Vorspannmittel (16) so angeordnet sind, dass sie die Klemme (4) in Richtung zu einer ersten Position vorspannen.

2. Klemmvorrichtung nach Anspruch 1, wobei das Verlagerungsmittel eine Dreh- oder Schwenkanordnung umfasst, die es ermöglicht, dass sich der Klemmabschnitt der Vorrichtung zwischen der ersten und der zweiten Position drehen oder verschwenken kann.

3. Klemmvorrichtung nach Anspruch 1 oder Anspruch 2, wobei das federnde Vorspannmittel eine Feder umfasst.

4. Klemmvorrichtung nach Anspruch 1 oder Anspruch 2, die eine Anzugsstellgliedanordnung umfasst, die ein gezieltes Anziehen der von der Klemmvorrichtung ausgeübten Klemmkraft ermöglicht.

5. Klemmvorrichtung nach Anspruch 4, wobei die Anzugsstellgliedanordnung eine Welle umfasst, die ein mit dem Ankerelement zusammenwirkendes Gewinde aufweist.

6. Klemmvorrichtung nach Anspruch 4 oder Anspruch 5, wobei die Stellgliedanordnung ein Stellglied umfasst, das
in dem Innenbereich eines Klemmkörpers verborgen oder positioniert ist, der die Klemmvorrichtung umfasst, und/oder
durch ein mechanisches Werkzeug von außerhalb der Klemmvorrichtung betätigbar ist.

7. Klemmvorrichtung nach einem der vorhergehenden Ansprüche, wobei
i) das federnde Vorspannmittel eine um eine Welle bereitgestellte Feder umfasst und die Welle auf schraubbare Weise in Eingriff mit dem Ankerelement steht und/oder
ii) das Ankerelement eine Gewindemutter oder ein Verbindungselement mit Gewinde umfasst.

8. Klemmvorrichtung nach einem der vorhergehenden Ansprüche, die ferner Folgendes umfasst:
Mittel mit einer relativ schwachen Kraft, die über das Ankerelement wirken, um die Klemmvorrichtung zu befestigen, und
Mittel mit einer relativ höheren Kraft, die über das Ankerelement wirken, um das Befestigen der Klemmvorrichtung anzuziehen.

9. Klemmvorrichtung nach einem der vorhergehenden Ansprüche, wobei der Klemmabschnitt um eine Achse, die durch das Ankerelement führt, axial neu ausgerichtet werden kann.

10. Rahmensystem, das eine Klemmvorrichtung nach einem der vorhergehenden Ansprüche umfasst, wobei das System ferner einen Trägerpfosten umfasst, an dem die Klemmvorrichtung anzubringen ist, wobei das Ankerelement unverlierbar in einem innenliegenden Abschnitt des Trägerpfostens gehalten ist, im Zusammenbau jedoch in der Lage ist, sich in der Längsrichtung des Pfostens zu bewegen.

11. Rahmensystem nach Anspruch 10, wobei das Ankerelement in einer Vielzahl von verschiedenen Positionen entlang der Längsrichtung des Pfostens an dem Trägerpfosten befestigt werden kann.

12. Rahmensystem nach Anspruch 10 oder Anspruch 11, wobei der Trägerpfosten einen länglichen Schlitz aufweist, der sich in Längsrichtung des Trägerpfostens erstreckt, wobei das Ankerelement so dimensioniert und/oder eingebunden ist, dass es nicht durch den Schlitz passt, und der Klemmabschnitt der Vorrichtung außerhalb des Trägerpfostens positioniert und über ein Verbindungselement, das sich durch den Schlitz erstreckt, mit dem Ankerelement verbunden ist.

13. Rahmensystem nach einem der Ansprüche 10 bis 12, wobei das zu klemmende Element eine längliche Querstrebe umfasst.

14. Rahmensystem nach einem der Ansprüche 10 bis 13, das ein Schutzschienen- oder Sicherheitsschienensystem umfasst, das eine Vielzahl von voneinander beabstandeten Trägerpfosten und eine Vielzahl von an den Trägerpfosten zu befestigenden verbindenden Querstreben umfasst.

15. Rahmensystem nach einem der Ansprüche 10 bis 14, wobei das Ankerelement unverlierbar innerhalb der Stütze gehalten, aber in der Lage ist, sich innerhalb der Stütze in Längsrichtung der Stütze zu bewegen, um zu ermöglichen, dass die Klemmvorrichtung in verschiedenen Positionen an der Stütze befestigt werden kann.

## Revendications

1. Dispositif de serrage (4) pour un système de châssis (1) comprenant un élément (5) à fixer à un support (2), le dispositif de serrage (4) comprenant:
un élément d'ancrage à maintenir captif par le support (2);
des moyens de déplacement (17a, 17b); et
des moyens de poussée élastiques (16);
**caractérisé en ce que** les moyens de déplacement (17a, 17b) permettent à une partie de serrage (6) du dispositif de se déplacer par rapport au support entre une première position pour serrer l'élément (5) et une seconde position pour permettre à l'élément (5) d'être accroché au ou décroché du dispositif de serrage (4); et
les moyens de poussée élastiques (16) sont agencés de manière à pousser la pince (4) en direction de la première position.

2. Dispositif de serrage selon la revendication 1, dans lequel les moyens de déplacement comprennent une formation de pivot ou de culbuteur qui permet à la partie de serrage du dispositif de pivoter ou de basculer entre les première et seconde positions.

3. Dispositif de serrage selon la revendication 1 ou la revendication 2, dans lequel les moyens de poussée élastiques comprennent un ressort.

4. Dispositif de serrage selon la revendication 1 ou la revendication 2, comprenant un agencement d'actionneur de serrage qui permet un serrage sélectif de la force de serrage appliquée par le dispositif de serrage.

5. Dispositif de serrage selon la revendication 4, dans lequel l'agencement d'actionneur de serrage arrangement comprend un arbre comportant un filet qui coopère avec l'élément d'ancrage.

6. Dispositif de serrage selon la revendication 4 ou la revendication 5, dans lequel l'agencement d'actionneur comprend un actionneur qui est:
dissimulé ou positionné à l'intérieur d'un corps de pince comprenant le dispositif de serrage; et/ou
actionnable depuis l'extérieur du dispositif de serrage à l'aide d'un outil mécanique.

7. Dispositif de serrage selon l'une quelconque des revendications précédentes, dans lequel:
i) les moyens de poussée élastiques comprennent un ressort prévu autour d'un arbre et l'arbre s'engage de façon vissée avec l'élément d'ancrage; et/ou
ii) l'élément d'ancrage comprend un écrou ou un élément de fixation fileté.

8. Dispositif de serrage selon l'une quelconque des revendications précédentes, et comprenant en outre:
des moyens de force relativement faible qui agissent par l'intermédiaire de l'élément d'ancrage pour fixer l'élément de pince; et
des moyens de force relativement plus élevée qui agissent par l'intermédiaire de l'élément d'ancrage pour serrer la fixation de l'élément de pince.

9. Dispositif de serrage selon l'une quelconque des revendications précédentes, dans lequel la partie de serrage est réorientable axialement autour d'un axe qui passe à travers l'élément d'ancrage.

10. Système de châssis comprenant un dispositif de serrage selon l'une quelconque des revendications précédentes, dans lequel le système comprend en outre un montant de support sur lequel le dispositif de serrage doit être monté; l'élément d'ancrage étant maintenu captif dans une partie intérieure du montant de support mais étant capable, dans l'assemblage, de se déplacer dans la direction longitudinale du montant.

11. Système de châssis selon la revendication 10, dans lequel l'élément d'ancrage peut être fixé au montant de support dans une pluralité de positions différentes le long de la longueur du montant.

12. Système de châssis selon la revendication 10 ou la revendication 11, dans lequel le montant de support comporte une fente allongée qui s'étend dans la direction longitudinale du montant de support, l'élément d'ancrage étant dimensionné et/ou contraint pour ne pas passer à travers la fente, et la partie de serrage du dispositif est positionnée à l'extérieur du montant de support et est connectée à l'élément d'ancrage par un élément de connexion qui s'étend à travers la fente.

13. Système de châssis selon l'une quelconque des revendications 10 à 12, dans lequel l'élément à serrer comprend un élément transversal allongé.

14. Système de châssis selon l'une quelconque des revendications 10 à 13, comprenant un système de rail de protection ou de rail de sécurité comprenant une pluralité de montants de support espacés et une pluralité d'éléments transversaux de connexion à fixer aux montants de support.

15. Système de châssis selon l'une quelconque des revendications 10 à 14, dans lequel l'élément d'ancrage est maintenu captif à l'intérieur du support, mais est capable de se déplacer dans la direction longitudinale du support, à l'intérieur du support, dans le but de permettre que le dispositif de serrage soit fixé au support à des positions différentes.
